# EUROPÄISCHE PATENTSCHRIFT

(11) **EP 2 230 753 B1**
(45) Veröffentlichungstag und Bekanntmachung des Hinweises auf die Patenterteilung: **08.05.2013**
(21) Anmeldenummer: 09155339.6
(22) Anmeldetag: 17.03.2009
(51) Int. Cl.: H02M 1/32, H02M 7/17, H02H 7/125

(54) **Bauteilschutz für einen Mehrpegelgleichrichter**
Component protection for a multi-level commutator
Protection de composant pour un redresseur à plusieurs niveaux

(43) Veröffentlichungstag der Anmeldung: 22.09.2010
(73) Patentinhaber: ABB Schweiz AG, 5400 Baden (CH)
(72) Erfinder: Herold, Simon, 8910 Affoltern am Albis (CH); Huggenberger, Thomas, 5415 Nussbaumen (CH); Suh, Yongsug, Jeonju, 560-822 (KR); Steimer, Peter, 5420 Ehrendingen (CH)
(74) Vertreter: ABB Patent Attorneys

(56) Entgegenhaltungen:
- EP-A- 0 980 134
- EP-A- 1 931 023
- JP-A- 2000 217 342
- JP-A- 2007 259 508

## Beschreibung

### Technisches Gebiet

Die Erfindung betrifft Gleichrichter mit Mehrpegelwandler, insbesondere mit Steuerfunktionen für den Schutz von funktionsfähigen Bauteilen bei Auftreten einer Fehlfunktion.

### Stand der Technik

In einer Vielzahl von industriellen Anwendungen werden Versorgungssysteme für hohe Gleichströme benötigt, wie z. B. bei Elektrolyseprozessen sowie Schmelzprozessen in der Metallindustrie. Die dazu benötigten Ströme liegen im Bereich von wenigen 10 kA bis mehreren 100 kA. Solch hohe Stromstärken werden üblicherweise mit Hilfe von Gleichrichtern aus insbesondere mehrphasigen Wechselspannungen erzeugt.

Derartige Gleichrichter sind aus dem Stand der Technik bekannt und umfassen in der Regel einen Transformator mit einem oder mehreren mehrphasigen Ausgängen für transformierte Wechselspannungen, jeweils den mehrphasigen Ausgängen zugeordnete Gleichrichterschaltungen und den Gleichrichterschaltungen nachgeschaltete, getaktete Gleichspannungswandlerschaltungen, mit denen die geforderte Spannung bzw. die geforderte Stromstärke eingestellt werden kann. Insbesondere die Verwendung von Mehrpegel-Gleichspannungswandlerschaltungen verbessert die Einstellbarkeit und reduziert die Belastung einzelner Bauteile, wie z.B. die Belastung einer Drosselspule am Ausgang des Gleichspannungswandlers.

Beim Bereitstellen von hohen Stromstärken kann es beim Ausfall eines oder mehrerer Bauteile zu einer hohen Belastung der verbleibenden funktionsfähigen Bauteile kommen, die zu einer Beschädigung oder Zerstörung der zunächst funktionsfähigen Bauteile führen kann. Dies kann eine spätere Reparatur des Gleichrichters erschweren bzw. aufwändiger machen. Schlimmstenfalls können bei hohen Stromstärken einzelne Bauteile explodieren, wodurch Personen, die sich in der Nähe des Gleichrichters aufhalten, verletzt werden könnten.

In der EP 1 931 023 A1 und in der EP 0 980 134 A1 ist jeweils eine gattungsgemässe Gleichrichteranordnung angegeben. Die JP 2000 217 342 A offenbart das Schlüßen von Leistungschaltern, um eine Schmelzsicherung aus zulösen.

### Darstellung der Erfindung

Es ist Aufgabe der vorliegenden Erfindung, ein Schutzsystem zur Verfügung zu stellen, mit dem die obigen Nachteile vermieden werden können, wobei insbesondere ein Schutz der funktionsfähigen Bauteile im Gleichrichter gewährleistet ist. Es ist darüber hinaus wünschenswert Redundanz vorzusehen, um es zu ermöglichen, funktionsfähige Teile des Gleichrichters nach einem Bauteilfehler weiter zu betreiben.

Diese Aufgabe wird durch die Gleichrichteranordnung gemäß Anspruch 1 sowie durch das Verfahren zum Betreiben einer solchen Gleichrichteranordnung gemäß dem Anspruch 11 gelöst.

Weitere vorteilhafte Ausgestaltungen der Erfindung sind in den abhängigen Ansprüchen angegeben.

Gemäß einem ersten Aspekt ist eine Gleichrichteranordnung zum Gleichrichten einer mehrphasigen Wechselspannung in eine variable Ausgangsgleichspannung vorgesehen.

Die Gleichrichteranordnung umfasst:
- eine Gleichrichterschaltung zum Bereitstellen einer Zwischenspannung;
- einen der Gleichrichterschaltung zugeordneten Gleichspannungswandler zum Generieren der variablen Ausgangsspannung durch aufeinander folgendes Ausgeben von verschiedenen Wandlerspannungen, wobei der Gleichspannungswandler Leistungsschalter aufweist, um je nach deren Schaltzuständen eine der Wandlerspannungen bereitzustellen;
- eine Steuereinheit, die ausgebildet ist, um den Gleichspannungswandler jeweils zur Ausgabe einer vorgegebenen Ausgangsspannung so anzusteuern, dass mehrere Wandlerspannungen aufeinander folgend ausgegeben werden, wobei die Steuereinheit ausgebildet ist, um bei Erkennen eines Fehlers entweder alle Leistungsschalter zu schließen oder alle Leistungsschalter zu öffnen.

Eine Idee der Gleichrichteranordnung besteht darin, durch geeignetes Durchschalten (Schließen) der Leistungsschalter des getakteten Gleichspannungswandlers bzw. Sperren (Öffnen) der Leistungsschalter in Folge einer Erkennung eines Fehlers in einem oder mehreren Bauteilen die gesamte Gleichrichteranordnung in einen Zustand zu bringen, bei dem eine Gefährdung bislang noch funktionsfähiger Bauteile ausgeschlossen ist, und wobei durch bewusstes Auslösen von Überstromsicherungen die Gleichrichteranordnung im Wesentlichen stromlos geschaltet werden kann.

Gemäß einer weiteren Ausführungsform kann der Gleichspannungswandler eine Serienschaltung von mindestens zwei Kapazitäten aufweisen, zwischen denen ein oder mehrere Zwischenkreispunkte gebildet werden, so dass mindestens eine der Wandlerspannungen mit Hilfe eines Zwischenkreispotenzials am Zwischenkreispunkt einstellbar ist, wobei mindestens einer der Kapazitäten eine Detektoreinheit zugeordnet ist, um eine elektrische Größe an der Kapazität zu ermitteln, wobei die Steuereinheit ausgebildet ist, um abhängig von der mindestens einen ermittelten elektrischen Größe den Fehler zu erkennen.

Weiterhin kann jedem Ausgangsanschluss des Gleichspannungswandlers einer der Leistungsschalter zugeordnet sein, wobei je nach Schaltzustand des jeweiligen Leistungsschalters entweder eines der durch die Zwischenspannung bereitgestellten Potenziale oder das Zwischenkreispotenzial an den jeweiligen Ausgangsanschluss angelegt wird.

Jeder Eingang der Gleichrichterschaltung kann über eine bei einem einen Schwellenwert übersteigenden Strom auslösende Überstromsicherung gegen einen Überstrom gesichert sein.

Gemäß einer weiteren Ausführungsform kann ein Transformator vorgesehen sein, um einen zu der mehrphasigen Wechselspannung zugehörigen mehrphasigen Wechselstrom zu transformieren und den transformierten mehrphasigen Wechselstrom über die Überstromsicherungen an die Gleichrichterschaltung anzulegen.

Weiterhin kann mindestens ein Ausgang jedes der Gleichspannungswandler über eine weitere bei einem einen Schwellenwert übersteigenden Strom auslösende Überstromsicherung gegen einen Überstrom gesichert sein.

Die Steuereinheit kann ferner ausgebildet sein, als den Fehler eine erhöhte Spannungsschwankung über mindestens einer der Kapazitäten zu detektieren und nach Erkennen der Spannungsschwankung alle Leistungsschalter des Gleichspannungswandlers zu öffnen.

Zusätzlich oder alternativ kann die Steuereinheit ausgebildet sein, als den Fehler einen Abfall des Betrags der Spannung über einer der Kapazitäten unter einen Schwellenwert zu detektieren und bei Erkennen des Abfalls der Spannung über der Kapazität alle Leistungsschalter des Gleichspannungswandlers zu schließen.

Zusätzlich oder alternativ kann die Steuereinheit ausgebildet sein, als den Fehler einen Anstieg der Spannung über einer der Kapazitäten über einen weiteren Schwellenwert zu detektieren, und bei Erkennen des Anstiegs der Spannung über der Kapazität alle Leistungsschalter des Gleichspannungswandlers zu schliessen.

Gemäß einer weiteren Ausführungsform können mehrere Gleichrichterzweige mit jeweils einer Gleichrichterschaltung und einem Gleichspannungswandler vorgesehen sein, wobei Ausgänge der Gleichrichterzweige miteinander parallel verschaltet sind. Dabei kann die Steuereinheit ausgebildet sein, bei Erkennen der Spannungsschwankung in einem der Gleichspannungswandler alle Leistungsschalter der mehreren Gleichspannungswandler zu öffnen, und/oder bei Erkennen des Abfalls der Spannung über der Kapazität eines der Gleichspannungswandler alle Leistungsschalter des Gleichspannungswandlers, der der Kapazität mit dem Abfall der Spannung zugeordnet ist, zu schließen und alle Leistungsschalter aller anderen Gleichspannungswandler zu öffnen, und/oder bei Erkennen des Anstiegs der Spannung über der betreffenden Kapazität eines der Gleichspannungswandler alle Leistungsschalter des Gleichspannungswandlers, der der Kapazität mit dem Anstiegs der Spannung zugeordnet ist, zu schließen und alle Leistungsschalter aller anderen Gleichspannungswandler zu öffnen.

Gemäß einem weiteren Aspekt ist ein Verfahren zum Betreiben einer Gleichrichteranordnung zum Gleichrichten eines mehrphasigen Wechselstroms in einen variablen Ausgangsgleichstrom vorgesehen. Die Gleichrichteranordnung umfasst eine Gleichrichterschaltung zum Bereitstellen jeweils einer Zwischenspannung und einen der Gleichrichterschaltung zugeordneten Gleichspannungswandler zum Generieren der variablen Ausgangsspannung durch aufeinander folgendes Ausgeben von Wandlerspannungen, wobei der Gleichspannungswandler Leistungsschalter aufweist, um je nach deren Schaltzuständen eine der Wandlerspannungen bereitzustellen. Das Verfahren umfasst die folgenden Schritte:
- Ansteuern des Gleichspannungswandlers jeweils zur Ausgabe einer vorgegebenen Ausgangsspannung, so dass mehrere Wandlerspannungen aufeinander folgend ausgegeben werden;
- bei Erkennen eines Fehlers, entweder Schließen aller Leistungsschalter des Gleichspannungswandlers oder Öffnen aller Leistungsschalter des Gleichspannungswandlers.

Weiterhin kann als der Fehler eine erhöhte Spannungsschwankung über mindestens einer der Kapazitäten detektiert werden und nach Erkennen der Spannungsschwankung können alle Leistungsschalter des Gleichspannungswandlers geöffnet werden, und/oder als der Fehler ein Abfall des Betrags der Spannung über einer der Kapazitäten des Gleichspannungswandlers unter einen Schwellenwert detektiert werden und bei Erkennen des Abfalls der Spannung über der Kapazität können alle Leistungsschalter des Gleichspannungswandlers geschlossen werden, und/oder als der Fehler ein Anstieg der Spannung über einer der Kapazitäten über einen weiteren Schwellenwert detektiert werden und bei Erkennen des Anstiegs der Spannung über der Kapazität können alle Leistungsschalter des Gleichspannungswandlers geschlossen werden.

Gemäß einer weiteren Ausführungsform können mehrere Gleichrichterzweige mit jeweils einer Gleichrichterschaltung und einem Gleichspannungswandler vorgesehen sein, wobei die Ausgänge der Gleichrichterzweige miteinander parallel verschaltet sind. Es kann vorgesehen sein, dass bei Erkennen der Spannungsschwankung in einem der Gleichspannungswandler alle Leistungsschalter der mehreren Gleichspannungswandler geöffnet werden, und/oder bei Erkennen des Abfalls der Spannung über der Kapazität alle Leistungsschalter des Gleichspannungswandlers, der der Kapazität mit dem Abfall der Spannung zugeordnet ist, geschlossen werden und alle Leistungsschalter aller anderen Gleichspannungswandler geöffnet werden, und/oder bei Erkennen des Anstiegs der Spannung über der Kapazität eines der Gleichspannungswandler alle Leistungsschalter aller Gleichspannungswandler geschlossen werden.

### Kurze Beschreibung der Zeichnungen

Bevorzugte Ausführungsformen werden nachfolgend anhand der beigefügten Zeichnungen näher erläutert. Es zeigen:
- Figur 1: eine Gleichrichteranordnung mit mehrstufigen Gleichspannungswandlern,
- Figur 2: eine weitere Ausführungsform einer Gleichrichteranordnung mit mehreren Gleichrichteranordnungen mit Redundanz und
- Figur 3: eine weitere Ausführungsform einer Gleichrichteranordnung mit mehreren mehrstufigen Gleichspannungswandlern mit Redundanz.

### Wege zur Ausführung der Erfindung

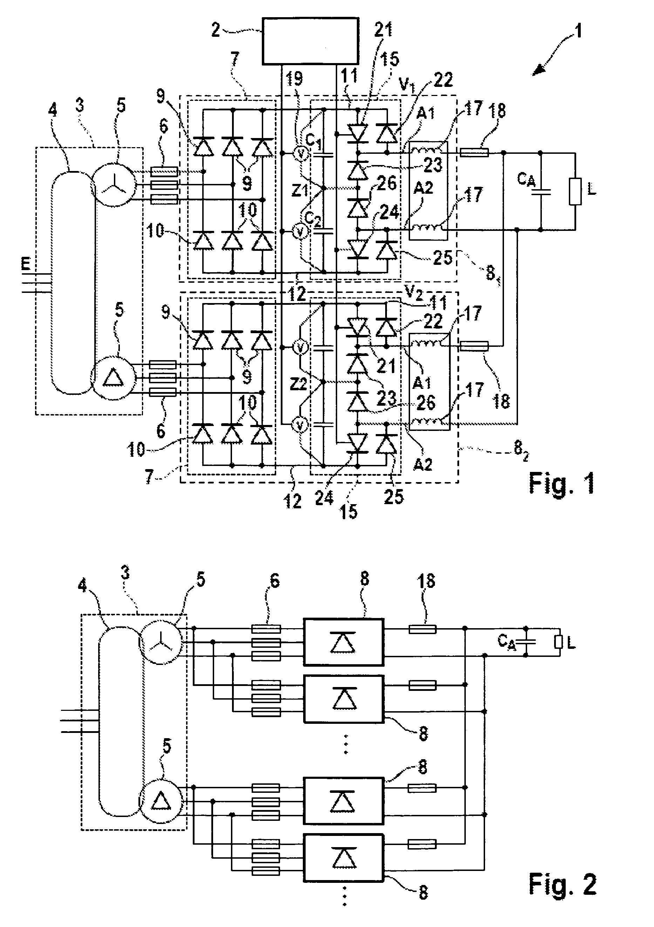

In Figur 1 ist eine Gleichrichteranordnung 1 als Schaltbild dargestellt, die durch eine Steuereinheit 2 betrieben wird. Die Steuereinheit 2 übernimmt die Ansteuerung einer Gleichspannungswandlerschaltung sowie Schutzfunktionen zum Schutz von Bauteilen der Gleichrichteranordnung 1.

Die Gleichrichteranordnung 1 umfasst einen mehrphasigen Wechselstromeingang E, der primärseitig eines Zwölf-Puls-Transformators 3 vorgesehen ist. Im vorliegenden Ausführungsbeispiel entspricht der mehrphasige Wechselstromeingang E drei Phaseneingängen, die der Primärwicklung 4 des Zwölf-Puls-Transformators 3 zugeführt werden. Sekundärseitig weist der Zwölf-Puls-Transformator 3 zwei galvanisch getrennte Sekundärwicklungen 5 auf, wobei eine erste Sekundärwicklung 5 in Sternschaltung und eine zweite Sekundärwicklung 5 in Dreiecksschaltung vorgesehen sind. An den Ausgängen der Sekundärwicklungen 5 werden jeweils drei Transformatorausgangsspannungen bereitgestellt.

Jede der Transformatorausgangsspannungen ist über eine Überstromsicherung 6 mit einem der entsprechenden Sekundärwicklung 5 zugeordneten Gleichrichterzweig 8 verbunden. Jeder Gleichrichterzweig 8 umfasst eine Gleichrichterschaltung 7, deren Eingänge über eine Überstromsicherung 6 mit einer der Transformatorausgangsspannungen der entsprechenden Sekundärwicklung 5 verbunden sind. Die Transformatorausgangsspannungen der Sekundärwicklung 5 in Sternschaltung werden über die jeweiligen Überstromsicherungen 6 mit den jeweiligen Eingängen einer dreiphasigen Gleichrichterschaltung 7 eines ersten Gleichrichterzweiges 8₁ verbunden. Entsprechend werden die Transformatorausgangsspannungen der Sekundärwicklung 5 in Dreiecksschaltung über die jeweiligen Überstromsicherungen 6 mit den Eingängen der Gleichrichterschaltung 7 eines zweiten Gleichrichterzweiges 8₂ verbunden.

Die Überstromsicherungen 6 sind so ausgebildet, dass sie bei einem Strom über einer Auslöseschwelle in einen permanent geöffneten Zustand übergehen. Beispielsweise kann die Überstromsicherung als Schmelzsicherung ausgebildet sein.

Jeder Eingang der Gleichrichterschaltung 7 ist mit einer Anode einer jeweiligen ersten Gleichrichterdiode 9 und mit einer Kathode einer jeweiligen zweiten Gleichrichterdiode 10 verbunden. In der gezeigten Ausführungsform umfasst somit jede Gleichrichterschaltung 7 sechs Gleichrichterdioden 9, 10, wobei die ersten Gleichrichterdioden 9 der Gleichrichterschaltung 7 mit deren Kathoden mit einer ersten Zwischenpotenzialleitung 11 und die Anoden der zweiten Gleichrichterdioden 10 mit einer zweiten Zwischenpotenzialleitung 12 verbunden sind. Auf der ersten Zwischenpotenzialleitung 11 wird ein erstes Zwischenpotenzial V₁ und auf der zweiten Zwischenpotenzialleitung 12 ein zweites Zwischenpotenzial V₂ bereitgestellt. Zwischen den Zwischenpotenzialen V₁, V₂ liegt eine Zwischenspannung an.

Die Zwischenspannung wird einem Gleichspannungswandler 15 zugeführt. Der Gleichspannungswandler 15 wird in geeigneter Weise durch die Steuereinheit 2 angesteuert, um eine Ausgangsgleichspannung an ihrem Ausgang einzustellen. Die Ausgangsgleichspannung wird aus der zwischen der ersten Zwischenpotenzialleitung 11 und der zweiten Zwischenpotenzialleitung 12 anliegenden Spannung abgeleitet.

Im Detail umfasst der Gleichspannungswandler 15 zwischen der ersten Zwischenpotenzialleitung 11 und der zweiten Zwischenpotenzialleitung 12 eine Serienschaltung mit einem ersten Kondensator C₁ und einem zweiten Kondensator C₂. Die Serienschaltung der Kondensatoren C₁, C₂ dient einerseits zum Glätten der von der Gleichrichterschaltung 7 gelieferten Zwischenspannung und andererseits wird zwischen den beiden in Reihe geschalteten Kondensatoren C₁, C₂ ein Zwischenkreispunkt Z zur Verfügung gestellt, der je nach Auslegung der Kondensatoren C₁, C₂ ein Zwischenkreispotenzial zwischen einem ersten Zwischenpotenzial V₁ auf der ersten Zwischenpotenzialleitung 11 und einem zweiten Zwischenpotenzial V₂ auf der zweiten Zwischenpotenzialleitung 12 einstellt.

An die erste Zwischenpotenzialleitung 11, den Zwischenkreispunkt Z und die zweite Zwischenpotenzialleitung 12 ist eine Auswahlschaltung des Gleichspannungswandlers 15 angeschlossen, um die Potenziale der ersten Zwischenpotenzialleitung 11, des Zwischenkreispunktes Z und der zweiten Zwischenpotenzialleitung 12 an die Ausgangsanschlüsse A₁, A₂ als Wandlerspannung auszugeben. Durch zeitlich aufeinander folgendes Ausgeben von verschiedenen Wandlerspannungen kann die gewünschte Ausgangsgleichspannung generiert werden.

Die Ausgangsanschlüsse A₁, A₂ des Gleichspannungswandlers 15 sind über Induktivitäten in Form von Drosselspulen 17 mit einer Last L verbunden. Dazu sind die Ausgänge der Gleichspannungswandler 15 der mehreren Gleichrichterzweige 8₁, 8₂ parallel geschaltet, um den möglichen Ausgangsstrom durch die Last L zu erhöhen.

Es ist weiterhin ein Ausgangskondensator C_{A} vorgesehen, der zwischen die beiden Ausgangsanschlüsse A₁, A₂ der parallel geschalteten Gleichspannungswandler 15 geschaltet ist.

Die Auswahlschaltung des Gleichspannungswandlers 15 weist einen ersten Leistungsschalter 21 auf, der beispielsweise in Form eines GCTs (Gate-Controlled Thyristor), IGBTs, Thyristors oder dergleichen ausgebildet sein kann. Im vorliegenden Ausführungsbeispiel wird davon ausgegangen, dass der Leistungsschalter 21 in Form eines GCTs, insbesondere als IGCT (Integrated Gate-Controlled Thyristor), vorgesehen ist. Ein Anoden-Anschluss des ersten GCTs 21 ist mit der ersten Zwischenpotenzialleitung 11 und ein Kathoden-Anschluss des ersten GCTs 21 mit dem ersten Ausgangsanschluss des Gleichspannungswandlers 15 verbunden. Zwischen dem Anoden-Anschluss und dem Kathoden-Anschluss des ersten GCTs 21 ist eine antiparallele Diode 22 geschaltet, die zum Schutz des GCTs 21 eine negative Spannung zwischen dem Anoden-Anschluss und dem Kathoden-Anschluss des ersten GCTs 21 ableitet. Der GCT 21 und die antiparallele Diode 22 können integriert als ein IGCT ausgebildet sein. Weiterhin ist eine erste Freilaufdiode 23 vorgesehen, die mit ihrem Anoden-Anschluss mit dem Zwischenkreispunkt Z und mit ihrem Kathoden-Anschluss mit dem ersten Ausgangsanschluss A₁ verbunden ist.

Es ist ein zweiter GCT 24 vorgesehen, der mit seinem Kathoden-Anschluss an die zweite Zwischenpotenzialleitung 12 angeschlossen ist und mit seinem Anoden-Anschluss mit dem zweiten Ausgangsanschluss A₂ verbunden ist. Parallel zu dem zweiten GCT 24 ist eine antiparallele Diode 25 vorgesehen, um eine negative Spannung zwischen dem Anoden-Anschluss und dem Kathoden-Anschluss des zweiten GCTs 24 abzuleiten, um den zweiten GCT 24 vor negativer Anoden-Kathoden-Spannung zu schützen. Auch der zweite GCT 24 ist mit der antiparallelen Diode 25 integriert als IGCT ausführbar. Es ist eine zweite Freilaufdiode 26 vorgesehen, die mit ihrem Anoden-Anschluss mit der zweiten Ausgangsleitung A₂ und mit ihrem Kathoden-Anschluss mit dem Zwischenkreispunkt Z verbunden ist. Steueranschlüsse (Gate-Anschlüsse) der beiden GCTs 21, 24 sind mit der Steuerschaltung 2 verbunden, so dass die GCTs 21, 24 separat ansteuerbar sind.

Die Steuerung erfolgt, indem jeder der GCTs 21, 24 selektiv geschlossen bzw. geöffnet wird, um ein bestimmtes Potenzial aus den Potenzialen der ersten Zwischenpotenzialleitung 11, des Zwischenkreispunktes Z und der zweiten Zwischenpotenzialleitung 12 für jeden der Ausgangsanschlüsse A₁, A₂ auszuwählen, um durch aufeinander folgendes Anlegen verschiedener Wandlerspannungen über den Ausgangsanschlüssen A₁, A₂ für eine jeweils bestimmte Zeitdauer eine vorgegebene Ausgangsspannung zu erzeugen. Die Ausgangsspannung ergibt sich als Mittelwert der durch die jeweilige Zeitdauer gewichteten Wandlerspannung durch den glättenden Effekt nachfolgender Induktivitäten, z.B. der Drosselinduktivität 17, und/oder Kapazitäten, z.B. des Ausgangskondensators C_{A}.

Nachgeschaltet zu der Drosselinduktivität 17 sind mit den ersten Ausgangsanschlüssen A₁ jedes Gleichrichterzweiges jeweilige Überstromsicherungen 18 vorgesehen, so dass ein Ausgangsstrom durch die Last L gegen einen Überstrom gesichert ist und der Gleichspannungswandler gegen einen Rückstrom aus der Last L gesichert ist.

Um eine Gleichrichteranordnung 1 bei Auftreten eines Fehlers in nur einem Bauteil zuverlässig abschalten zu können, ist eine geeignete Rückmeldung über den Betriebszustand der Gleichrichteranordnung 1 notwendig. Dazu sind Spannungsmesser 19 über jedem der Kondensatoren C₁, C₂ vorgesehen, die eine Angabe über die über den Kondensatoren C₁, C₂ anliegende Gleichspannung an die Steuereinheit 2 kommunizieren. Die dazu verwendeten Spannungsmesser 19 können beispielsweise Spannungsteiler, A/D-Wandler und dergleichen aufweisen, um ein entsprechendes Signal, möglichst in definierter, vorzugsweise digitalisierter Form, der Steuereinheit 2 zur Verfügung zu stellen.

Im Folgenden wird beschrieben, wie die Steuereinheit 2 auf Ausfälle einzelner Komponenten der Gleichrichteranordnung 1 reagiert.

Der Ausfall einer oder mehrerer der Überstromsicherungen 6, die zwischen den Ausgängen des Zwölf-Puls-Transformators 3 und den entsprechenden Eingängen der jeweiligen Gleichrichterschaltung 7 vorgesehen sind, kann von der Steuereinheit 2 durch einen erhöhten Spannungsripple über einem oder beiden Kondensatoren C₁, C₂ erkannt werden. Der Spannungsripple kann durch eine Auswerteeinrichtung (nicht gezeigt) in der Steuereinheit 2 analysiert werden, indem beispielsweise eine Differenz eines maximalen Spannungswertes und eines minimalen Spannungswertes innerhalb einer vorgegebenen Zeitdauer, insbesondere einer Zeitdauer, die der Periodendauer der Frequenz der angelegten Wechselspannung entspricht, gebildet wird.

Alternativ kann eine geöffnete Überstromsicherung 6 auch mit Hilfe eines Abgriffs über der Überstromsicherung 6 detektiert werden (nicht gezeigt), so dass der Steuereinheit 2 unmittelbar eine Information über den Zustand der Überstromsicherung 6 zur Verfügung steht. Dabei wird eine Spannung über der Überstromsicherung 6 gemessen und ausgewertet. Ist die Spannung eine Gleichspannung, deren Betrag unter einem Schwellenwert liegt, so ist die Überstromsicherung 6 funktionsfähig, d.h. geschlossen. Entspricht die Spannung über der Überstromsicherung 6 einer Wechselspannung so ist diese vermutlich ausgelöst, d.h. geöffnet.

Weiterhin ist es auch denkbar, Hilfskontakte über den Überstromsicherungen 6 vorzusehen, welche von der Steuereinheit 2 überwacht werden und welche beim Auslösen der Überstromsicherungen 6 öffnen und so den Zustand der Überstromsicherungen 6 an die Steuereinheit 2 übermitteln. Das Öffnen des Hilfskontaktes erfolgt mechanisch bei Durchbrennen der zugehörigen Überstromsicherung 6 und basiert nicht auf einer Spannungsmessung über der Überstromsicherung 6.

Wird ein Fehler in einer oder mehreren der Überstromsicherungen 6 auf eine dieser Arten erkannt, werden die GCTs 21, 24 gemäß einem Puls-Stopp-Betrieb abgeschaltet. Im Puls-Stopp-Betrieb wird die getaktete Ansteuerung der GCTs 21, 24 in jedem Gleichrichterzweig 8 unterbrochen und alle GCTs geöffnet, um jeglichen weiteren Stromfluss zu unterbrechen. Somit gelangt das Potenzial nicht über die GCTs auf die jeweiligen Ausgangsleitungen A₁, A₂ der Gleichrichterzweige 8₁, 8₂, so dass am Ausgang die Spannung 0V ausgegeben wird.

In einem anderen Fall, bei dem eine der Gleichrichterdioden 9, 10 aufgrund eines Fehlers kurzgeschlossen ist, führt dies dazu, dass eine oder mehrere der Überstromsicherungen 6 auslösen und dadurch die entsprechende Transformatorausgangsspannung nicht an dem zugeordneten Eingang der betreffenden Gleichrichterschaltung 7 anliegt. Die geöffneten Überstromsicherungen 6 werden, wie oben beschrieben, entweder durch den erhöhten Gleichspannungsripple über einem oder beiden Kondensatoren C₁, C₂ oder durch eine Auswertung eines externen Abgriffs der Spannung über den Überstromsicherungen 6 durch die Steuereinheit 2 erkannt. Als Reaktion steuert die Steuereinheit 2, wie oben beschrieben, gemäß einem Puls-Stopp-Betrieb die GCTs 21, 24 so an, dass diese permanent geöffnet sind.

Bei einem Kurzschluss über einem der Kondensatoren C₁^{,} C₂ fällt die Spannung über dem Kondensator sofort auf ca. 0V, was in einfacher Weise über den jeweiligen Spannungsmesser 19 durch die Steuereinheit 2, z.B. durch Unterschreiten eines entsprechenden Schwellenwerts, detektiert werden kann. In dem Gleichrichterzweig 8₁, 8₂, der den kurzgeschlossenen (defekten) Kondensator C₁, C₂ enthält, schaltet die Steuereinheit 2 beide GCTs 21, 24 gemäß einem Durchschaltbetrieb so, dass diese permanent geschlossen, d.h. leitend sind. Gleichzeitig steuert die Steuereinheit 2 alle übrigen Gleichrichterzweige 8 gemäß dem Puls-Stopp-Betrieb so an, dass deren GCTs 21, 24 geöffnet sind. Auf diese Weise wird derjenige Gleichrichterzweig 8, in der kein Fehler aufgetreten ist, geschützt und kann ohne weitere Maßnahmen nach Behebung des Fehlers oder nach Abkoppeln des fehlerbehafteten Gleichrichterzweiges 8 weiter betrieben werden. Die gemäß dem Durchschaltbetrieb durchgeschalteten GCTs 21, 24 verbinden die Gleichrichterschaltung 7 des Gleichrichterzweiges 8, in dem der Fehler aufgetreten ist, direkt mit der Last L. Dies erhöht den Eingangswechselstrom und den Ausgangsgleichstrom, bis zwei oder drei der Überstromsicherungen 6 auslösen. Die weitere Überstromstromsicherung 18 ist vorzugsweise mit einer höheren Trägheit als die Überstromsicherung 6 versehen und löst daher in diesem Fall nicht aus. Abhängig von der Lastimpedanz kann ein solcher Durchschaltbetrieb zu einem Überschwingen der Ausgangsspannung führen, was umgekehrt zu einem Rückschwingen des Stroms durch den Gleichspannungswandler 15 führen kann, der gemäß dem Durchschaltbetrieb geschaltet worden ist. Da GCTs im Allgemeinen nicht geeignet sind, einen negativen Strom zu tragen, sind die antiparallelen Dioden 22, 25 parallel zu den GCTs 21, 24 vorgesehen.

Bei einem Kurzschluss über einem der GCTs 21, 24 erhöht sich der Ausgangsstrom des Gleichspannungswandlers 15 des betreffenden Gleichrichterzweiges 8 und die Spannung über dem dem kurzgeschlossenen GCT zugeordneten Kondensator C₁, C₂ nimmt schnell ab. Dies ist durch die Steuereinheit 2 z.B. mit Hilfe eines geeigneten Schwellenwertvergleichs feststellbar. Der Gleichspannungswandler 15 mit dem kurzgeschlossenen GCT wird dann durch die Steuereinheit 2 gemäß einem Durchschaltbetrieb angesteuert, sobald die Spannung über dem betreffenden Kondensator C₁, C₂ unter den bestimmten Schwellenwert abfällt, während der Gleichrichterzweig, in dem kein Fehler festgestellt worden ist, einen Puls-Stopp-Betrieb durchführt. Der Durchschaltbetrieb führt zu einem Auslösen von zwei oder mehr als zwei Überstromsicherungen 6 des fehlerbehafteten Gleichrichterzweiges 8.

Im Falle eines Fehlers des GCTs, bei dem sich der GCT nicht einschaltet, führt dies dazu, dass die Spannungsverteilung über den Kondensatoren C₁, C₂ asymmetrisch wird, d.h. die Spannung des betreffenden Zwischenkreispunkts Z wandert in Richtung des ersten oder des zweiten Zwischenpotenzials V₁, V₂; insbesondere nimmt die Spannung über dem Kondensator C₁, C₂, der dem fehlerbehafteten GCT 21, 24 zugeordnet ist, zu, während die Spannung über dem Kondensator C₁, C₂, der dem fehlerfreien GCT 21, 24 zugeordnet ist, abnimmt. Sobald die Asymmetrie ein vorbestimmtes Spannungsniveau erreicht, kann die Steuereinheit 2, z.B. durch Schwellenwertvergleiche der Kondensatorspannungen oder durch Vergleich der Abweichung zwischen beiden Kondensatorspannungen, einen Einschaltfehler des GCTs erkennen. Erkennt die Steuereinheit 2 einen Einschaltfehler, werden die Gleichrichterzweige gemäß einem Puls-Stopp-Betrieb betrieben, d.h. alle GCTs 21, 24 werden permanent geöffnet.

Bei einem Kurzschluss über einer der Freilaufdioden 23, 26 wird der entsprechende GCT zerstört, sobald dieser eingeschaltet (geschlossen) wird. Dadurch entsteht ein Kurzschluss über dem betreffenden Kondensator C₁, C₂, der durch die Steuereinheit 2 erkennbar ist, wenn die entsprechende Kondensatorspannung etwa 0V annimmt. Dies kann wie oben beschrieben durch einen entsprechenden Schwellenwertvergleich vorgenommen werden. Die Steuereinheit 2 steuert dann den Gleichspannungswandler 15 des Gleichrichterzweigs 8, in dem der Kurzschluss erkannt worden ist, gemäß dem Durchschaltbetrieb so an, dass beide GCTs 21, 24 des betreffenden Gleichspannungswandlers 15 schließen, sobald die Spannung über dem Kondensator C₁, C₂ unter den vorbestimmten Schwellenwert fällt. Der Gleichrichterzweig 8, in dem kein Fehler festgestellt worden ist, wird gemäß dem Puls-Stopp-Betrieb betrieben und alle GCTs 21, 24 entsprechend permanent geöffnet.

Bei einem Kurzschluss über einer der antiparallelen Dioden 22, 25 steigt der Ausgangsstrom des entsprechenden Gleichrichterzweiges 8 an und die Spannung über dem entsprechenden Kondensator C₁, C₂ fällt sehr schnell ab. Der Gleichspannungswandler 15 des Gleichrichterzweigs 8, in dem der Kurzschluss aufgetreten ist, wird wie in den obigen Fällen gemäß einem Durchschaltbetrieb angesteuert, sobald die Kondensatorspannung unter den vorbestimmten Schwellenwert fällt. Der fehlerfreie Gleichrichterzweig 8 wird durch die Steuereinheit 2 gemäß dem Puls-Stopp-Betrieb angesteuert.

Bei einem Kurzschluss zwischen Windungen der Drosselinduktivitäten 17 in den Ausgangsleitungen A₁ und A₂, der im Wesentlichen einem Kurzschluss über beiden Freilaufdioden 23, 26 entspricht, verhindert ein Auslösen der Überstromsicherung 18 einen Rückwärtslaststrom, der die Drosselinduktivitäten 17 und/oder die GCTs 21, 24 zerstören könnte. Rückwärtslastströme können beispielsweise bei Elektrolyseprozessen auftreten, bei denen das Elektrolysesystem kurzzeitig als Gleichstromquelle arbeiten kann. Ein solcher Fehler kann durch den resultierenden Abfall einer Kondensatorspannung detektiert werden. Zum Schutz der übrigen Gleichrichteranordnung 1 wird die Steuereinheit 2 den Gleichrichterzweig 8, an dessen Ausgang der Kurzschluss aufgetreten ist, gemäß dem Durchschaltbetrieb ansteuern, um die GCTs 21, 24 zu schließen. Der bzw. die Gleichrichterzweige 8, in denen kein Fehler aufgetreten ist, werden gemäß einem Puls-Stopp-Betrieb durch die Steuereinheit 2 angesteuert, so dass die entsprechenden GCTs 21, 24 geöffnet werden.

Ein spontanes Auslösen der Überstromsicherung 18 im Ausgangszweig, das gelegentlich aufgrund der Alterung der Überstromsicherung 18 oder aufgrund eines Bauteilfehlers auftreten kann, führt dazu, dass sich das Gesamtsystem so verhält, als ob der GCT, an dessen zugeordnetem Ausgangsanschluss die Überstromsicherung 18 angeschlossen ist, einen Einschaltfehler aufweist. Entsprechend werden alle Gleichrichterzweige 8, wie für diese Fehlerart oben ausgeführt, gemäß einem Puls-Stopp-Betrieb inaktiv geschaltet.

Wie in Fig. 2 dargestellt können, um den gesamten Ausgangsstrom zu erhöhen, Gleichrichterzweige 8 parallel zueinander geschaltet werden. Bei Verwendung eines Zwölf-Puls-Transformators sollte die Anzahl von Gleichrichterzweigen 8, die mit der Sekundärwicklung 5 in Sternschaltung verbunden sind, der Anzahl der Gleichrichterzweige 8, die mit der Sekundärwicklung 5 in Dreiecksschaltung verbunden sind, entsprechen, um die Zwölf-Puls-Charakteristik beizubehalten.

Bei einem erkannten Fehlerfall wird generell - je nach Fehlerart - ein Durchschaltbetrieb bzw. ein Puls-Stopp-Betrieb für alle Gleichrichterzweige 8 durchgeführt, die zueinander parallel mit der gleichen Sekundärwicklung 5 verbunden sind. D.h. wenn mehrere Gleichrichterzweige 8, die mit derselben Sekundärwicklung 5 verbunden sind, einen Durchschaltbetrieb durchführen, werden alle weiteren Gleichrichterzweige 8, die mit einer der verbleibenden drei Sekundärwicklungen verbunden sind, gemäß einem Puls-Stopp-Betrieb betrieben.

Wenn eine der Überstromsicherungen 6 auslöst oder eine Gleichrichterdiode 9, 10 kurzgeschlossen wird, kann die Bogenspannung einer sich öffnenden Überstromsicherung 6 eine Überspannung in den Kondensatoren C₁, C₂ der direkt parallel zueinander verschalteten Gleichrichterzweige 8 hervorrufen. Um eine Schädigung der Kondensatoren C₁, C₂ zu verhindern, ist ein Überspannungsschutz notwendig. Sobald eine Spannung an einem der Kondensatoren C₁, C₂ über einen vorbestimmten Pegel ansteigt, steuert die Steuereinheit 2 den entsprechenden Gleichrichterzweig 8 und folglich alle direkt parallel dazu geschalteten Gleichrichterzweige 8 gemäß einem Durchschaltbetrieb so an, dass deren GCTs 21, 24 permanent schließen. Dies reduziert sofort die Spannung über den Kondensatoren C₁, C₂ und löst in der Folge mindestens zwei der Überstromsicherungen 6 am Eingang jedes Gleichrichterzweigs 8 aus, die direkt parallel zu dem Gleichrichterzweig 8 mit der ausgelösten Überstromsicherung 6 bzw. mit dem Kurzschluss über den Gleichrichterdioden 9, 10 geschaltet sind.

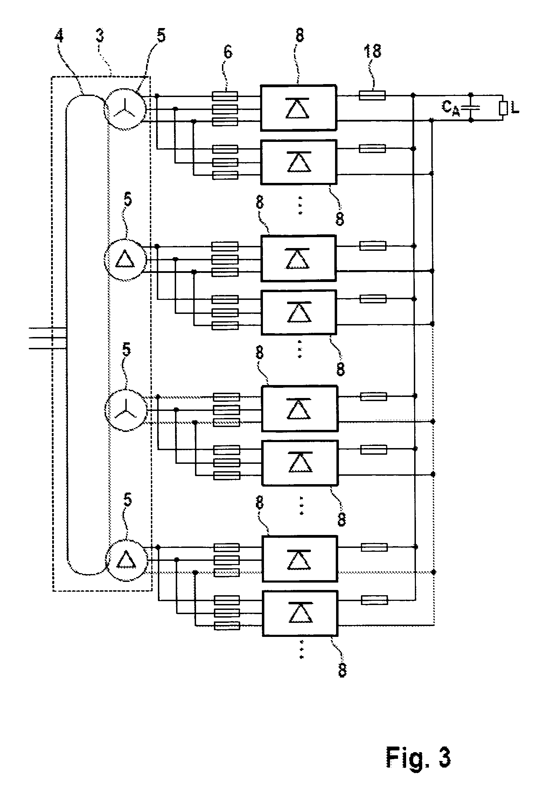

Das in Figur 3 gezeigte System bietet eine Redundanz hinsichtlich Fehlern von Bauteilen. Der Unterschied zwischen der Figur 2 und der Figur 3 besteht in dem Aufbau des Zwölf-Puls-Transformators 3. Die Gleichrichterzweige 8 sind identisch. Der Zwölf-Puls-Transformator der Figur 3 weist vier Sekundärwicklungen 5, zwei in Sternschaltung und zwei in Dreiecksschaltung, auf. Die Anzahl der Gleichrichterzweige 8, die mit jeder der Sekundärwicklungen 5 verbunden sind, sollte möglichst konstant sein, um die Zwölfpulscharakteristik beizubehalten.

Eine Gleichrichteranordnung gemäß Figur 3 kann mit den gleichen Schutzfunktionen betrieben werden wie die Systeme gemäß Figur 2. Es ist jedoch möglich, den Betrieb mit einem Teil der Gleichrichterzweige 8 wieder aufzunehmen, nachdem ein Fehler eines Bauteils aufgetreten ist. Alle direkt zu dem fehlerhaften Gleichrichterzweig 8 parallel geschalteten Gleichrichterzweige 8 müssen dazu zuvor deaktiviert werden, so dass diese bei einer Wiederinbetriebnahme der Gleichrichteranordnung 1 in einem inaktiven Zustand verbleiben. Zusätzlich müssen alle Gleichrichterzweige 8, die mit einer weiteren Sekundärwicklung des Zwölf-Puls-Transformators 3 verbunden sind, abgeschaltet werden, um die Zwölf-Puls-Charakteristik des Transformators 3 beizubehalten. Die weitere zu deaktivierende Sekundärwicklung 5 ist daher so gewählt, dass stets die gleiche Anzahl von Sekundärwicklungen 5 in Dreiecksschaltung und Sekundärwicklungen 5 in Sternschaltung aktiv betrieben werden. Wenn als Beispiel die Position des Fehlers in einem Gleichrichterzweig 8 auftritt, der mit einer der Sekundärwicklungen 5 in Sternschaltung verbunden ist, kann die Steuereinheit 2 den Betrieb mit allen Gleichrichterzweigen 8 aufnehmen, abgesehen von den Gleichrichterzweigen 8, an deren zugeordneter Sekundärwicklung der fehlerhafte Gleichrichterzweig 8 angeordnet ist, und den Gleichrichterzweigen 8, die einer der Sekundärwicklungen 5 in Dreiecksschaltung zugeordnet sind, oder umgekehrt. Dabei ist der nominelle Ausgangsstrom jedoch auf 50% reduziert.

### Bezugszeichenliste

- 1: Gleichrichteranordnung
- 2: Steuereinheit
- 3: Zwölf-Puls-Transformator
- 4: Primärwicklung
- 5: Sekundärwicklung
- 6: Überstromsicherung
- 7: Gleichrichterschaltung
- 8: Gleichrichterzweig
- 9: Erste Gleichrichterdiode
- 10: Zweite Gleichrichterdiode
- 11: Erste Zwischenpotenzialleitung
- 12: Zweite Zwischenpotenzialleitung
- 15: Gleichspannungswandler
- 17: Drosselinduktivitäten
- 18: weitere Überstromsicherung
- 19: Spannungsmesser
- 21: Erster GCT
- 22: Erste antiparallele Diode
- 23: Erste Freilaufdiode
- 24: Zweiter GCT
- 25: Zweite antiparallele Diode
- 26: Zweite Freilaufdiode
- C₁, C₂: Kondensatoren
- A₁, A₂: Ausgangsleitungen
- C_{A}: Ausgangskondensator
- L: Last
- V₁: Erstes Zwischenpotenzial
- V₂: Zweites Zwischenpotenzial
- Z: Zwischenkreispunkt

## Patentansprüche

1. Gleichrichteranordnung (1) zum Gleichrichten einer mehrphasigen Wechselspannung in eine variable Ausgangsgleichspannung, umfassend:
- eine Gleichrichterschaltung (7) zum Bereitstellen einer Zwischenspannung;
- einen der Gleichrichterschaltung (7) zugeordneten Gleichspannungswandler (95) zum Generieren der variablen Ausgangsspannung durch aufeinander folgendes Ausgeben von verschiedenen Wandlerspannungen,
wobei der Gleichspannungswandler (15) Leistungsschalter (21, 24) aufweist, um je nach deren Schaltzuständen eine der Wandlerspannungen bereitzustellen;
- eine Steuereinheit (2), die ausgebildet ist, um die Leistungsschalter des Gleichspannungswandlers (15) jeweils zur Ausgabe einer vorgegebenen Ausgangsspannung so anzusteuern, dass mehrere Wandlerspannungen aufelnander folgend ausgegeben werden;
- wobei mehrere Gleichrichterzweige (8) mit jeweils einer Gleichrichterschaltung (7) und einem Gleichspannungswandler (15) vorgesehen sind, wobei die Ausgänge der Gfelchrichterzwelge (8) miteinander parallel verschaltet sind;
**dadurch gekennzeichnet, dass**
die Steuereinheit (2) ausgebildet ist, um bei Erkennen eines Fehlers entweder alle Leistungsschalter (21, 24) des Gleichspannungswandlers (15) zu schließen oder alle Leistungsschalter (21, 24) des Gleichspannungswandlers (15) zu öffnen, dass
- die Steuereinheit (2) ausgebildet ist, bei Erkennen einer erhöhten Spannungsschwankung In einem der Gleichspannungswandler (15) alle Leistungsschalter (21, 24) der mehreren Gleichspannungswandler (15) zu öffnen, wobei die Steuereinheit (2) ausgebildet ist, bei Erkennen eines Abfalls des Betrages der Spannung über einer Kapazität (C₁, C₂) eines der Gleichspannungswandler (15) alle Leistungsschalter (21, 24) des Gleichspannungswandlers (15), der der Kapazität (C₁, C₂) mit dem Abfall der Spannung zugeordnet ist, zu schließen und alle Leistungsschalter (21, 24) aller anderen Gleichspannungswandler (15) zu öffnen.

2. Gleichrichteranordnung (1) nach Anspruch 1, wobei der Gleichspannungswandler (15) eine Serienschaltung von mindestens zwei Kapazitäten (C₁, C₂) aufweist, zwischen denen ein oder mehrere Zwischenkreispunkte (Z) gebildet werden, so dass mindestens eine der Wandlerspannungen mit Hilfe eines Zwischenkreispotenzials am Zwischenkreispunkt (Z) einstellbar ist,
wobei mindestens einer der Kapazitäten (C₁, C₂) eine Detektoreinheit (19) zugeordnet ist, um eine elektrische Größe an der Kapazität (C₁, C₂) zu ermitteln,
wobei die Steuereinheit (2) ausgebildet ist, um abhängig von der mindestens einen ermittelten elektrischen Größe den Fehler zu erkennen.

3. Gleichrichteranordnung (1) nach Anspruch 2, wobei jedem Ausgangsanschluss des Gleichspannungswandlers (15) einer der Leistungsschalter (21, 24) zugeordnet ist, wobei je nach Schaltzustand des jeweiligen Leistungsschalters (21, 24) entweder eines der durch die Zwischenspannung bereitgestellten Potenziale oder das Zwischenkreispotenzial an den jeweiligen Ausgangsanschluss angelegt wird.

4. Gleichrichteranordnung (1) nach einem der Ansprüche 2 bis 3, wobei jeder Eingang der Gleichrichterschaltung (7) über eine bei einem einen Schwellenwert übersteigenden Strom auslösende Überstromsicherung (6) gegen einen Überstrom gesichert ist.

5. Gleichrichteranordnung (1) nach Anspruch 4, wobei ein Transformator (3) vorgesehen ist, um einen zu der mehrphasigen Wechselspannung zugehörigen mehrphasigen Wechselstrom zu transformieren und den transformierten mehrphasigen Wechselstrom über die Überstromsicherungen an die Gleichrichterschaltung (7) anzulegen.

6. Gleichrichteranordnung (1) nach einem der Ansprüche 2 bis 5, wobei mindestens ein Ausgang jedes der Gleichspannungswandler (15) über eine weitere bei einem einen Schwellenwert übersteigenden Strom auslösende Überstromsicherung (18) gegen einen Überstrom gesichert ist.

7. Gleichrichteranordnung (1) nach einem der Ansprüche 2 bis 6, wobei die Steuereinheit (2) ausgebildet ist, als den Fehler eine erhöhte Spannungsschwankung über mindestens einer der Kapazitäten (C₁, C₂) zu detektieren und nach Erkennen der Spannungsschwankung alle Leistungsschalter (21, 24) des Gleichspannungswandlers (15) zu öffnen.

8. Gleichrichteranordnung (1) nach einem der Ansprüche 2 bis 7, wobei die Steuereinheit (2) ausgebildet ist, als den Fehler einen Abfall des Betrags der Spannung über einer der Kapazitäten (C₁, C₂) unter einen Schwellenwert zu detektieren und bei Erkennen des Abfalls der Spannung über der Kapazität (C₁, C₂) alle Leistungsschalter (21, 24) des Gleichspannungswandlers (15) zu schließen.

9. Gleichrichteranordnung (1) nach einem der Ansprüche 1 bis 8, wobei die Steuereinheit (2) ausgebildet ist, als den Fehler einen Anstieg der Spannung über einer der Kapazitäten (C₁, C₂) Ober einen weiteren Schwellenwert zu detektieren, und bei Erkennen des Anstiegs der Spannung über der betreffenden Kapazität (C₁, C₂) alle Leistungsschalter (21, 24) des Gleichspannungswandlers (15) zu schliessen.

10. Gleichrichteranordnung (1) nach einem der Ansprüche 1 bis 9, wobei die Steuereinheit (2) ausgebildet ist, bei Erkennen des Anstiegs der Spannung über der Kapazität (C₁, C₂) eines der Gleichspannungswandler (15) die Leistungsschalter (21, 24) aller Gleichspannungswandler (15) zu schliessen.

11. Verfahren zum Betreiben einer Gleichrichteranordnung (1) zum Gleichrichten einer mehrphasigen Wechselspannung in eine variable Ausgangsgleichspannung, wobei die Gleichrichteranordnung (1) umfasst:
- eine Gleichrichterschaltung (7) zum Bereitstellen einer Zwischenspannung;
- einen der Gleichrichterschaltung (7) zugeordneten Gleichspannungswandler (15) zum Generieren der variablen Ausgangsspannung durch aufeinander folgendes Ausgeben von verschiedenen Wandlerspannungen,
wobei der Gleichspannungswandler (15) Leistungsschalter (21, 24) aufweist, um je nach deren Schaltzuständen eine der Wandlerspannungen bereitzustellen;
mit folgenden Schritten:
- Ansteuern der Leistungsschalter des Gleichspannungswandlers (15) jeweils zur Ausgabe einer vorgegebenen Ausgangsspannung, so dass mehrere Wandlerspannungen aufeinander folgend ausgegeben werden; **gekennzeichnet durch** folgende weitere schritte
- bei Erkennen eines Fehlers entweder Schliessen aller Leistungsschalter (21, 24) des Gleichspannungswandlers (15) oder Öffnen alle Leistungsschalter (21, 24) des Gleichspannungswandlers (15),
- bei Erkennen einer erhöhten Spannungsschwankung In einem der Gleichspannungswandler (15) Öffnen aller Leistungsschalter (21, 24) der mehreren Gleichspannungswandler (15) und/oder bei Erkennen eines Abfalls des Betrages der Spannung über einer Kapazität (C₁, C₂) eines der Gleichspannungswandler (15) Schliessen aller Leistungsschalter (21, 24) des Gleichspannungswandlers (15), der der Kapazität (C₁, C₂) mit dem Abfall der Spannung zugeordnet ist, und Öffnen aller Leistungsschalter (21, 24) aller anderen Gleichspannungswandler (15).

12. Verfahren nach Anspruch 11.
wobei der Gleichspannungswandler (15) eine Serienschaltung von mindestens zwei Kapazitäten (C₁, C₂) aufweist, zwischen denen ein oder mehrere Zwischenkreispunkte (Z) gebildet werden, so dass mindestens eine der Wandlerspannungen mit Hilfe eines Zwischenkreispotenzials am Zwischenkreispunkt (Z) einstellbar ist,
- wobei als der Fehler eine erhöhte Spannungsschwankung über mindestens eine der Kapazitäten detektiert wird und nach Erkennen der Spannungsschwankung alle Leistungsschalter (21, 24) des Gleichspannungswandlers (15) geöffnet werden, und/oder
- wobei als der Fehler ein Abfall des Betrags der Spannung über einer der Kapazitäten des Gleichspannungswandlers (15) unter einen Schwellenwert detektiert wird und bei Erkennen des Abfalls der Spannung über der Kapazität alle Leistungsschalter (21, 24) des Gleichspannungswandlers (15) geschlossen werden, und/oder
- wobei als der Fehler ein Anstieg der Spannung über einer der Kapazitäten über einen weiteren Schwellenwert detektiert wird und bei Erkennen des Anstiegs der Spannung über der Kapazität alle Leistungsschalter (21, 24) des Gleichspannungswandlers (15) geschlossen werden.

13. Verfahren nach Anspruch 12,
- wobei nach Erkennen der Spannungsschwankung in einem der Gleichspannungswandler (15) alle Leistungsschalter (21, 24) der mehreren Gleichspannungswandler (15) geöffnet werden, und/oder
wobei bei Erkennen des Abfalls der Spannung über der Kapazität alle Leistungsschalter (21, 24) des Gleichspannungswandlers (15), der der Kapazität mit dem Abfall der Spannung zugeordnet ist, geschlossen werden und alle Leistungsschalter (21, 24) aller anderen Gleichspannungswandler (15) geöffnet werden, und/oder wobei bei Erkennen des Anstiegs der Spannung über der Kapazität eines der Gleichspannungswandler (15) alle Leistungsschalter (21, 24) des Gleichspannungswandlers (15), der der Kapazität mit dem Anstieg der Spannung zugeordnet ist, geschlossen werden und alle Leistungsschalter (21, 24) aller anderen Gleichspannungswandler (15) geöffnet werden.

## Claims

1. Rectifier arrangement (1) for rectifying a polyphase AC voltage to give a variable DC output voltage, comprising:
- a rectifier circuit (7) for providing an intermediate voltage;
- a DC voltage converter (15), which is associated with the rectifier circuit (7) for generating the variable output voltage by successively outputting different converter voltages,
wherein the DC voltage converter (15) has power switches (21, 24) in order to provide one of the converter voltages depending on the switching state of said power switches;
- a control unit (2), which is designed to drive the power switches of the DC voltage converter (15) in each case to output a predetermined output voltage in such a way that a plurality of converter voltages are output successively;
- wherein a plurality of rectifier branches (8), each having a rectifier circuit (7) and a DC voltage converter (15), are provided, wherein the outputs of the rectifier branches (8) are connected in parallel with one another,
**characterized in that**
the control unit (2) is designed either to close all of the power switches (21, 24) of the DC voltage converter (15) or to open all of the power switches (21, 24) of the DC voltage converter (15) in the event of identification of a fault, **in that**
- the control unit (2) is designed to open all of the power switches (21, 24) of the plurality of DC voltage converters (15) in the event of identification of an increased fluctuation in the voltage in one of the DC voltage converters (15), wherein the control unit (2) is designed to close, in the event of a drop in the magnitude of the voltage across a capacitance (C₁, C₂) of one of the DC voltage converters (15), all of the power switches (21, 24) of that DC voltage converter (15) which is associated with the capacitance (C₁, C₂) with the drop in voltage and to open all of the power switches (21, 24) of all of the other DC voltage converters (15).

2. Rectifier arrangement (1) according to Claim 1, wherein the DC voltage converter (15) has a series circuit comprising at least two capacitances (C₁, C₂), between which one or more intermediate circuit points (Z) are formed, with the result that at least one of the converter voltages can be adjusted with the aid of an intermediate circuit potential at the intermediate circuit point (Z), wherein at least one of the capacitances (C₁, C₂) has an associated detector unit (19) in order to determine an electrical variable at the capacitance (C₁, C₂), wherein the control unit (2) is designed to identify the fault depending on the at least one electrical variable determined.

3. Rectifier arrangement (1) according to Claim 2, wherein each output connection of the DC voltage converter (15) is associated with one of the power switches (21, 24), wherein either one of the potentials provided by the intermediate voltage or the intermediate circuit potential is applied to the respective output connection, depending on the switching state of the respective power switch (21, 24).

4. Rectifier arrangement (1) according to either of Claims 2 and 3, wherein each input of the rectifier circuit (7) is protected from an overcurrent via an overcurrent fuse (6) which triggers in the event of a current which exceeds a threshold value.

5. Rectifier arrangement (1) according to Claim 4, wherein a transformer (3) is provided in order to transform a polyphase alternating current associated with the polyphase AC voltage and to apply the transformed polyphase alternating current via the overcurrent fuses to the rectifier circuit (7).

6. Rectifier arrangement (1) according to one of Claims 2 to 5, wherein at least one output of each of the DC voltage converters (15) is protected against an overcurrent via a further overcurrent fuse (18) which triggers in the event of a current which exceeds a threshold value.

7. Rectifier arrangement (1) according to one of Claims 2 to 6, wherein the control unit (2) is designed to detect an increased fluctuation in the voltage across at least one of the capacitances (C₁, C₂) as the fault and to open all of the power switches (21, 24) of the DC voltage converter (15) once the fluctuation in voltage has been identified.

8. Rectifier arrangement (1) according to one of Claims 2 to 7, wherein the control unit (2) is designed to detect a drop in the magnitude of the voltage across one of the capacitances (C₁, C₂) to below a threshold value as the fault and to close all of the power switches (21, 24) of the DC voltage converter (15) in the event of identification of the drop in the voltage across the capacitance (C₁, C₂) .

9. Rectifier arrangement (1) according to one of Claims 1 to 8, wherein the control unit (2) is designed to detect a rise in the voltage across one of the capacitances (C₁, C₂) to above a further threshold value as the fault and to close all of the power switches (21, 24) of the DC voltage converter (15) in the event of identification of the rise in the voltage across the capacitance (C₁, C₂) in question.

10. Rectifier arrangement (1) according to one of Claims 1 to 9, wherein the control unit (2) is designed to close the power switches (21, 24) of all of the DC voltage converters (15) in the event of identification of the rise in the voltage across the capacitance (C₁, C₂) of one of the DC voltage converters (15).

11. Method for operating a rectifier arrangement (1) for rectifying a polyphase AC voltage to give a variable DC output voltage, wherein the rectifier arrangement (1) comprises:
- a rectifier circuit (7) for providing an intermediate voltage;
- a DC voltage converter (15), which is associated with the rectifier circuit (7) for generating the variable output voltage by successively outputting different converter voltages,
wherein the DC voltage converter (15) has power switches (21, 24) in order to provide one of the converter voltages depending on the switching state of said power switches;
- wherein a plurality of rectifier branches (8), each having a rectifier circuit (7) and a DC voltage converter (15), are provided, wherein the outputs of the rectifier branches (8) are connected in parallel with one another, having the following steps:
- actuating the power switches of the DC voltage converter (15) in each case for outputting a predetermined output voltage, with the result that a plurality of converter voltages are output successively;
**characterized by** the following further steps:
- either closing all of the power switches (21, 24) of the DC voltage converter (15) or opening all of the power switches (21, 24) of the DC voltage converter (15) in the event of identification of a fault,
- opening all of the power switches (21, 24) of the plurality of DC voltage converters (15) in the event of identification of an increased fluctuation in the voltage in one of the DC voltage converters (15) and/or, in the event of identification of a drop in the magnitude of the voltage across a capacitance (C₁, C₂) of one of the DC voltage converters (15), closing all of the power switches (21, 24) of that DC voltage converter (15) which is associated with the capacitance (C₁, C₂) with the drop in voltage, and opening all of the power switches (21, 24) of all of the other DC voltage converters (15).

12. Method according to Claim 11, wherein the DC voltage converter (15) has a series circuit comprising at least two capacitances (C₁, C₂), between which one or more intermediate circuit points (Z) are formed, with the result that at least one of the converter voltages can be adjusted with the aid of an intermediate circuit potential at the intermediate circuit point (Z),
- wherein an increased fluctuation in the voltage across at least one of the capacitances is detected as the fault and, after identification of the fluctuation in voltage, all of the power switches (21, 24) of the DC voltage converter (15) are opened, and/or
- wherein a drop in the magnitude of the voltage across one of the capacitances of the DC voltage converter (15) below a threshold value is detected as the fault and, in the event of identification of the drop in the voltage across the capacitance, all of the power switches (21, 24) of the DC voltage converter (15) are closed, and/or
- wherein a rise in the voltage across one of the capacitances to above a further threshold value is detected as the fault and, in the event of identification of the rise in the voltage across the capacitance, all of the power switches (21, 24) of the DC voltage converter (15) are closed.

13. Method according to Claim 12,
- wherein, after identification of the fluctuation in the voltage in one of the DC voltage converters (15), all of the power switches (21, 24) of the plurality of DC voltage converters (15) are opened, and/or
wherein, in the event of identification of the drop in the voltage across the capacitance, all of the power switches (21, 24) of that DC voltage converter (15) which is associated with the capacitance with the drop in voltage are closed and all of the power switches (21, 24) of all of the other DC voltage converters (15) are opened, and/or
wherein in the event of identification of the rise in the voltage across the capacitance of one of the DC voltage converters (15), all of the power switches (21, 24) of that DC voltage converter (15) which is associated with the capacitance with the rise in voltage are closed and all of the power switches (21, 24) of all of the other DC voltage converters (15) are opened.

## Revendications

1. Arrangement redresseur (1) pour redresser une tension alternative à plusieurs phases en une tension continue de sortie variable, comprenant :
- un circuit redresseur (7) pour délivrer une tension intermédiaire ;
- un convertisseur de tension continue (15) associé au circuit redresseur (7) pour générer une tension de sortie variable en délivrant différentes tensions de convertisseur les unes à la suite des autres,
le convertisseur de tension continue (15) présentant des commutateurs de puissance (21, 24) pour délivrer l'une des tensions de convertisseur respectivement en fonction de leurs états de commutation ;
- une unité de commande (2) qui est configurée pour commander les commutateurs de puissance du convertisseur de tension continue (15) respectivement pour délivrer une tension de sortie prédéfinie de telle sorte que plusieurs tensions de convertisseur soient délivrées les unes à la suite des autres ;
plusieurs branches de redresseur (8) étant prévues avec à chaque fois un circuit redresseur (7) et un convertisseur de tension continue (15), les sorties des branches de redresseur (8) étant branchées en parallèles les unes avec les autres ;
**caractérisé en ce que**
l'unité de commande (2) est configurée pour, en cas de détection d'un défaut, soit fermer tous les commutateurs de puissance (21, 24) du convertisseur de tension continue (15), soit ouvrir tous les commutateurs de puissance (21, 24) du convertisseur de tension continue (15), **en ce que**
l'unité de commande (2) est configurée pour, en cas de détection d'une fluctuation de tension accrue dans l'un des convertisseurs de tension continue (15), ouvrir tous les commutateurs de puissance (21, 24) des plusieurs convertisseurs de tension continue (15), en cas de détection d'une chute de la valeur de la tension aux bornes d'un condensateur (C₁, C₂) de l'un des convertisseurs de tension continue (15), fermer tous les commutateurs de puissance (21, 24) du convertisseur de tension continue (15) auquel est associé le condensateur (C₁, C₂) qui présente la chute de tension et ouvrir tous les commutateurs de puissance (21, 24) de tous les autres convertisseurs de tension continue (15).

2. Arrangement redresseur (1) selon la revendication 1, dans lequel le convertisseur de tension continue (15) présente un circuit série composé d'au moins deux condensateurs (C₁, C₂) entre lesquels sont formés un ou plusieurs points de circuit intermédiaire (Z), de sorte qu'au moins l'une des tensions de convertisseur soit réglable à l'aide d'un potentiel de circuit intermédiaire au point de circuit intermédiaire (Z),
dans lequel une unité de détection (19) est associée à au moins l'un des condensateurs (C₁, C₂) pour déterminer une grandeur électrique au niveau des condensateurs (C₁, C₂),
dans lequel l'unité de commande (2) est configurée pour détecter les défauts en fonction de l'au moins une grandeur électrique déterminée.

3. Arrangement redresseur (1) selon la revendication 2, dans lequel l'un des commutateurs de puissance (21, 24) est associé à chaque borne de sortie du convertisseur de tension continue (15),
dans lequel, suivant l'état de commutation du commutateur de puissance (21, 24) correspondant, soit l'un des potentiels délivrés par la tension intermédiaire, soit le potentiel de circuit intermédiaire est appliqué à la borne de sortie correspondante.

4. Arrangement redresseur (1) selon l'une des revendications 2 à 3, dans lequel chaque entrée du circuit redresseur (7) est protégée contre une surintensité par le biais d'une sécurité de surintensité (6) qui se déclenche lorsqu'un courant devient supérieur à une valeur de seuil.

5. Arrangement redresseur (1) selon la revendication 4, dans lequel il est prévu un transformateur (3) pour transformer un courant alternatif à plusieurs phases associé à la tension alternative à plusieurs phases et appliquer le courant alternatif à plusieurs phases transformé au circuit redresseur (7) par le biais des sécurités de surintensité.

6. Arrangement redresseur (1) selon l'une des revendications 2 à 5, dans lequel au moins une sortie de chacun des convertisseurs de tension continue (15) est protégée contre une surintensité par le biais d'une sécurité de surintensité (18) supplémentaire qui se déclenche lorsqu'un courant devient supérieur à une valeur de seuil.

7. Arrangement redresseur (1) selon l'une des revendications 2 à 6, dans lequel l'unité de commande (2) est configurée pour détecter comme défaut une fluctuation de tension accrue aux bornes d'au moins l'un des condensateurs (C₁, C₂) et pour ouvrir tous les commutateurs de puissance (21, 24) du convertisseur de tension continue (15) après la détection de la fluctuation de tension.

8. Arrangement redresseur (1) selon l'une des revendications 2 à 7, dans lequel l'unité de commande (2) est configurée pour détecter comme défaut une chute de la valeur de la tension aux bornes de l'un des condensateurs (C₁, C₂) au-dessous d'une valeur de seuil et pour fermer tous les commutateurs de puissance (21, 24) du convertisseur de tension continue (15) lors de la détection de la chute de tension aux bornes du condensateur (C₁, C₂).

9. Arrangement redresseur (1) selon l'une des revendications 1 à 8, dans lequel l'unité de commande (2) est configurée pour détecter comme défaut une augmentation de la tension aux bornes de l'un des condensateurs (C₁, C₂) au-dessus d'une valeur de seuil supplémentaire et pour fermer tous les commutateurs de puissance (21, 24) du convertisseur de tension continue (15) lors de la détection de l'augmentation de la tension aux bornes du condensateur (C₁, C₂) concerné.

10. Arrangement redresseur (1) selon l'une des revendications 1 à 9, dans lequel l'unité de commande (2) est configurée pour, lors de la détection de l'augmentation de la tension aux bornes du condensateur (C₁, C₂) de l'un des convertisseurs de tension continue (15), fermer les commutateurs de puissance (21, 24) de tous les convertisseurs de tension continue (15).

11. Procédé d'exploitation d'un arrangement redresseur (1) pour redresser une tension alternative à plusieurs phases en une tension continue de sortie variable, l'arrangement redresseur (1) comprenant :
- un circuit redresseur (7) pour délivrer une tension intermédiaire ;
- un convertisseur de tension continue (15) associé au circuit redresseur (7) pour générer une tension de sortie variable en délivrant différentes tensions de convertisseur les unes à la suite des autres,
le convertisseur de tension continue (15) présentant des commutateurs de puissance (21, 24) pour délivrer l'une des tensions de convertisseur respectivement en fonction de leurs états de commutation ;
plusieurs branches de redresseur (8) étant prévues avec à chaque fois un circuit redresseur (7) et un convertisseur de tension continue (15), les sorties des branches de redresseur (8) étant branchées en parallèles les unes avec les autres ;
comprenant les étapes suivantes :
- commande des commutateurs de puissance du convertisseur de tension continue (15) respectivement pour délivrer une tension de sortie prédéfinie de telle sorte que plusieurs tensions de convertisseur soient délivrées les unes à la suite des autres ;
**caractérisé par** les étapes supplémentaires suivantes :
- en cas de détection d'un défaut, soit fermeture de tous les commutateurs de puissance (21, 24) du convertisseur de tension continue (15), soit ouverture de tous les commutateurs de puissance (21, 24) du convertisseur de tension continue (15),
- en cas de détection d'une fluctuation de tension accrue dans l'un des convertisseurs de tension continue (15), ouverture de tous les commutateurs de puissance (21, 24) des plusieurs convertisseurs de tension continue (15), et/ou en cas de détection d'une chute de la valeur de la tension aux bornes d'un condensateur (C₁, C₂) de l'un des convertisseurs de tension continue (15), fermeture de tous les commutateurs de puissance (21, 24) du convertisseur de tension continue (15) auquel est associé le condensateur (C₁, C₂) qui présente la chute de tension et ouverture de tous les commutateurs de puissance (21, 24) de tous les autres convertisseurs de tension continue (15).

12. Procédé selon la revendication 11, selon lequel le convertisseur de tension continue (15) présente un circuit série composé d'au moins deux condensateurs (C₁, C₂) entre lesquels sont formés un ou plusieurs points de circuit intermédiaire (Z), de sorte qu'au moins l'une des tensions de convertisseur soit réglable à l'aide d'un potentiel de circuit intermédiaire au point de circuit intermédiaire (Z),
- selon lequel le défaut détecté est une fluctuation de tension accrue aux bornes d'au moins l'un des condensateurs et, tous les commutateurs de puissance (21, 24) du convertisseur de tension continue (15) sont ouverts après la détection de la fluctuation de tension, et/ou
- selon lequel le défaut détecté est une chute de la valeur de la tension accrue aux bornes de l'un des condensateurs du convertisseur de tension continue (15) au-dessous d'une valeur de seuil et tous les commutateurs de puissance (21, 24) du convertisseur de tension continue (15) sont fermés lors de la détection de la chute de la tension aux bornes du condensateur, et/ou
- selon lequel le défaut détecté est une augmentation de la tension accrue aux bornes de l'un des condensateurs au-dessus d'une valeur de seuil supplémentaire et tous les commutateurs de puissance (21, 24) du convertisseur de tension continue (15) sont fermés lors de la détection de l'augmentation de la tension aux bornes du condensateur.

13. Procédé selon la revendication 12,
- selon lequel, après la détection de la fluctuation de tension dans l'un des convertisseurs de tension continue (15), tous les commutateurs de puissance (21, 24) des plusieurs convertisseurs de tension continue (15) sont ouverts, et/ou
- selon lequel, lors de la détection de la chute de la tension aux bornes du condensateur, tous les commutateurs de puissance (21, 24) du convertisseur de tension continue (15) auquel est associé le condensateur qui présente la chute de tension sont fermés et tous les commutateurs de puissance (21, 24) de tous les autres convertisseurs de tension continue (15) sont ouverts, et/ou
- selon lequel, lors de la détection de l'augmentation de la tension aux bornes du condensateur de l'un des convertisseurs de tension continue (15), tous les commutateurs de puissance (21, 24) du convertisseur de tension continue (15) auquel est associé le condensateur qui présente l'augmentation de tension sont fermés et tous les commutateurs de puissance (21, 24) de tous les autres convertisseurs de tension continue (15) sont ouverts.
